# FASCICULE DE BREVET EUROPEEN

(11) **EP 4 359 748 B1**
(45) Date de publication et mention de la délivrance du brevet: **09.09.2026**
(21) Numéro de dépôt: 22734317.5
(22) Date de dépôt: 23.06.2022
(51) Int. Cl.: G01L 1/04, G01L 1/12, G01M 5/00

(54) **DISPOSITIF POUR LA DÉTECTION DE DÉCOLLEMENT ET ENSEMBLE POUR UN TEL DISPOSITIF**
VORRICHTUNG ZUR DETEKTION VON TRENNUNGEN UND MONTAGE FÜR EINE SOLCHE VORRICHTUNG
DEVICE FOR DETECTING DISBONDMENT AND ASSEMBLY FOR SUCH A DEVICE

(30) Priorité: 23.06.2021 FR 2106658
(43) Date de publication de la demande: 01.05.2024
(73) Titulaire: Blade Sense SAS, 29940 La Forêt Fouesnant (FR)
(72) Inventeur: VOISIN, Dimitri, Marcel, 29940 La Forêt Fouesnant (FR)
(74) Mandataire: Derriennic, Tangui Jean
(86) Numéro de dépôt international: PCT/EP2022/067116
(87) Numéro de publication internationale: WO 2022/268929

(56) Documents cités:
- EP-A1- 3 798 596
- STURM HANNES ET AL: "Boundary Layer Separation and Reattachment Detection on Airfoils by Thermal Flow Sensors", vol. 12, 1 January 2012 (2012-01-01), pages 14292 - 14306, XP055899295, Retrieved from the Internet <URL:https://www.researchgate.net/publication/233828474_Boundary_Layer_Separation_and_Reattachment_Detection_on_Airfoils_by_Thermal_Flow_Sensors/fulltext/02d5422d0cf280d1e7beec69/Boundary-Layer-Separation-and-Reattachment-Detection-on-Airfoils-by-Thermal-Flow-Sensors.pdf> DOI: 10.3390/s121114292

## Description

### Domaine technique de l'invention

La présente invention concerne un dispositif pour la détection de décollement et ensemble pour un tel dispositif.

Les domaines concernés par l'invention sont, de manière non exhaustive, les domaines suivants : tous les secteurs de la mécanique dans les airs avec l'aéronautique, sur l'eau et dans l'eau avec le secteur maritime, sur terre avec le transport terrestre, et le génie civil.

Bien entendu, d'autres domaines dans lesquels tous profils aérodynamiques ou hydrodynamiques comportant un capteur de décollement d'écoulement configuré avec la présente invention, sont également concernés. Un document antérieur pertinent pour l'invention est le document EP 3 798 596 A1.

### Technique antérieure

Dans la nature, les profils aérodynamiques et hydrodynamiques ne rencontrent que rarement des écoulements laminaires, c'est-à-dire lorsque les lignes de courants sont parfaitement collées au profil.

Lorsque la couche limite est soumise à un gradient de pression adverse, ladite couche limite subit alors un décollement.

Une fois la couche limite décollée de la paroi, ladite couche limite laisse place à un écoulement de retour.

La position du point de décollement conditionne ainsi la force aérodynamique de portance.

De plus, plus le point de décollement est proche du bord d'attaque, plus la recirculation est importante, ce qui induit une diminution de la portance menant au décrochage du profil lorsque l'angle d'incidence, également nommé angle d'attaque, est trop élevé.

Le décrochage est donc la limite de l'augmentation de la force exercée sur le profil et composée de la force de portance et de traînée, selon l'angle d'attaque. En effet, la vitesse d'écoulement n'est pas la même de part et d'autre du profil, induisant une différence de pression entre le côté supérieur et inférieur du dit profil. Il en résulte une force orientée vers le haut d'autant plus importante que l'angle d'attaque est important.

Le décrochage du profil correspond alors à la perte plus ou moins brusque de portance, provoquée par le décollement de l'écoulement sur la partie supérieure du profil.

Deux types de décrochage sont alors possibles : le décrochage statique intervenant dans le cas des écoulement stationnaires à partir d'un certain angle d'incidence, et le décrochage dynamique, lorsque le profil continu de porter alors qu'il a dépassé l'angle de décrochage statique et ceci à cause de la rapidité des variations d'angle d'incidence.

Dans le cas des profils de pales d'éolienne, l'environnement proche et la turbulence de la couche limite atmosphérique impliquent un vent soufflant de manière aléatoire sur l'éolienne. Les nombreuses instabilités aérodynamiques provoquent des décollements de l'écoulement à l'origine du décrochage ce qui provoque des fluctuations de charges mécaniques sur l'éolienne et notamment sur les pales.

Le décrochage mène à la perte de portance car lorsque le profil décroche et est donc fortement incliné, les angles d'attaques sont davantage importants et le fluide ne parvient plus à suivre les trajectoires imposées, ce qui engendre une diminution de la déformation de la trajectoire des fluides, il y a alors moins d'accélération du fluide sur la face supérieure du profil impliquant une diminution de la dépression. Le décrochage mène également à l'augmentation de la traînée, mais aussi à des nuisances sonores, ainsi qu'à la fatigue de la structure du profil.

Ainsi, diverses techniques de détection du décrochage existent déjà.

Afin de détecter le décrochage et le raccrochage, il faut détecter l'état de l'écoulement, c'est-à-dire la capacité à détecter la zone de séparation du flux. La détection est alors permise grâce à des appendices tels que des fils (laine, toile, bande magnétique ...) suffisamment légers pour ne pas perturber l'écoulement et suivre le flux à l'endroit du capteur, nommés penons.

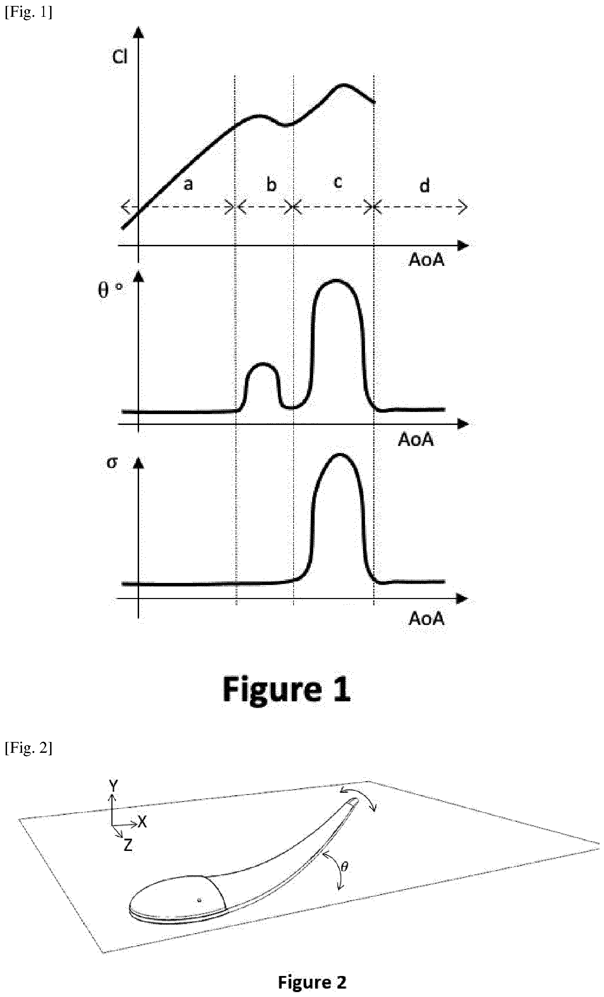

La [Fig.1] est composée de trois courbes : le premier graphique en haut correspond à la courbe de l'évolution du coefficient de portance du signal du capteur de décollement en fonction de l'angle d'attaque sur un profil stable aérodynamiquement/hydrodyna-miquement, le second graphique au milieu correspond à la courbe de l'évolution de la moyenne glissante du signal du capteur de décollement en fonction de l'angle d'attaque sur un profil stable aérodynamiquement/hydrodynamiquement, et le troisième graphique en bas correspond à l'écart type glissant en fonction de l'angle d'attaque sur un profil stable aérodynamiquement/hydrodynamiquement.

L'abscisse de la première courbe nommé Cl pour « Lift Coefficient » en terminologie anglo-saxonne (pour coefficient de portance en français) et l'ordonné nommé AoA pour « Angle of Attack » en terminologie anglo-saxonne (pour angle d'attaque en français). La forme de cette première courbe est croissante lors la phase (a) durant laquelle les valeurs de l'angle d'attaque sont faibles, puis la forme de la première courbe continue de croître et se stabilise durant la phase (b), avant de croître à nouveau lors de la phase (c), suite à quoi, la première courbe disparaît lors de la phase (d). A partir d'une certaine valeur de l'angle d'attaque, la courbe de la portance n'apparait plus, signifiant que le phénomène de décrochage a eu lieu. En effet, cette valeur de l'angle d'attaque correspond à l'incidence de portance maximale où la dépression sur la partie supérieure du profil diminue brutalement suite au décollement des filets d'air et le profil subit alors le décrochage.

L'abscisse de la seconde courbe correspond à la valeur de l'angle téta (θ) et plus particulièrement à la moyenne glissante de l'angle entre la queue et le profil, l'ordonnée correspond à la valeur de l'angle d'attaque. La forme de la seconde courbe est rectiligne, stable et avec une moyenne glissante relativement nulle lors la phase (a) durant laquelle les valeurs de l'angle d'attaque sont faibles, puis ladite forme de la seconde courbe présente une croissance suivie d'une décroissance formant une courbe en cloche lors de la phase (b), avant de présenter à nouveau une courbe en forme de cloche durant la phase (c) mais ayant des valeurs plus importantes qu'en phase (b), enfin la courbe se stabilise à nouveau lors de la phase (d) et redevient rectiligne avec une moyenne glissante proche de 0.

L'abscisse de la troisième courbe correspond à la valeur de sigma et plus particulièrement à l'écart type glissant de l'angle entre la queue et le profil, l'ordonné correspond à la valeur de l'angle d'attaque. La forme de la troisième courbe est rectiligne, stable et avec une moyenne glissante relativement nulle lors la phase (a) et de la phase et (b), puis ladite forme de la troisième courbe présente une croissance suivie d'une décroissance formant une courbe en cloche lors de la phase (c) similaire à la courbe en cloche de la seconde courbe lors de la phase (c), enfin la courbe se stabilise à nouveau lors de la phase (d) et redevient rectiligne avec un écart type proche de 0.

La moyenne et l'écart type glissant du signal du capteur permettent de suivre et anticiper l'évolution de la portance sur les quatre phases.

L'angle d'attaque correspondant à l'angle formé par la corde reliant le bord d'attaque et le bord de fuite, avec la vitesse de l'air en amont. Plus l'angle d'attaque est important, plus les filets d'air sont déviés par le profil. Une fois que l'angle de décrochage est dépassé (d), les performances aérodynamiques du profil sont nettement dégradées.

Certains documents de l'art antérieur proposent des dispositifs de détection de décrochage. On connaît par exemple le document de publication EP2246559.

Ce document décrit une invention concernant une pale d'éolienne avec un capteur de décrochage électrique configuré sur au moins l'une de ladite surface basse pression de la pale ou de ladite surface haute pression de la pale pour détecter un reflux dans une condition de décrochage au niveau de ladite surface de pression respective.

Le capteur de décollement comprend : une alimentation électrique ; un volet configuré de manière pivotante par rapport à la surface de pression ; et un circuit capteur qui répond au mouvement dudit volet entre lesdites première et seconde positions et génère un signal électrique correspondant qui indique une condition de décollement.

L'inconvénient de ce type de solution est la perte de performance liée à l'utilisation d'un volet non déformable qui est par nature intrusif pour l'écoulement étudié. L'utilisation d'un volet non déformable engendre une augmentation de la traînée, une instabilité aérodynamique/hydrodynamique, et un déclanchement précoce de la cavitation.

Un autre inconvénient est la fragilité mécanique liée à la liaison pivot qui mène à l'augmentation du coefficient de frottement du pivot entrainant une dérive du capteur menant à une fiabilité réduite par rapport à une solution sans partie mobile. Les capteurs à base d'axe pivotant ne sont donc pas une solution viable dans le temps.

De plus l'utilisation d'un volet non déformable ne permet pas de décrire finement le décollement dû à la rupture de courbe sur le profil.

Un autre inconvénient des capteurs à base de volet à axe pivot est qu'ils sont difficilement implantables les uns derrières les autres le long de la corde, car les perturbations des capteurs en amont favorisent le décollement sur les capteurs avals.

### Présentation de l'invention

La présente invention vise à remédier à ces inconvénients avec une approche totalement novatrice.

Plus précisément, l'invention a pour objectif de fournir un dispositif pour la détection de décollement constitué d'une languette en matériau souple et déformable sans partie en mouvement, permettant la détection du décollement, l'optimisation du contrôle de l'angle d'incidence, et la détection du mauvais alignement des éoliennes suivant l'angle de lacet.

En particulier, un objectif de l'invention est de fournir une telle technique permettant de s'affranchir de tout autre système de réglage complexe, l'implantation de la présente invention permet l'intégration du capteur de décollement au sein du profil afin d'être le moins intrusif possible et ne pas compromettre les performances aérodynamiques ou hydrodynamiques du profil.

Un autre objectif de l'invention est de fournir une telle technique qui soit peu coûteuse à mettre en œuvre et qui ne nécessite pas d'entretien particulier.

Un objectif de l'invention est de fournir une telle technique, qui puisse être adaptée aisément à des systèmes existants.

Ces objectifs, ainsi que d'autres qui apparaîtront par la suite, sont atteints, selon un premier aspect, à l'aide d'un dispositif pour la détection de décollement pour profil aérodynamique ou hydrodynamique, comprenant une structure monobloc remarquable en ce qu'il comporte :
- une languette en matériau souple et déformable à partir de silicone s'étendant entre une première extrémité et une deuxième extrémité, la deuxième extrémité étant libre ;
- une platine de fixation configurée pour être fixée à un profil, la platine de fixation comporte la première extrémité de la languette souple et déformable, ladite platine de fixation comporte en outre une carte électronique et au moins un capteur de décollement comprenant un aimant générant un signal électrique qui indique une valeur de décollement selon trois axes orthogonaux ; la carte électronique fixée sur la platine de fixation transmet le signal électrique par un système de transmission radio, ou par un moyen filaire.

Grâce à ces dispositions, le capteur de décollement présente l'avantage d'être parfaitement encastrable dans le profil aérodynamique/hydrodynamique afin de ne pas être intrusif et ne pas perturber l'écoulement en augmentant la traînée.

La languette est, elle-même, constituée d'un matériau souple et déformable.

La présente invention permet d'élargir les "champs d'application et permet donc d'être utilisée pour la détection de givre et de glace, et la détection de défaut structurel, ainsi que la détection de nuisance sonore. La présente invention fonctionne alors pour tout type de fluide.

Ladite invention est adaptée à tout type de profil et appendice aérodynamique (aile d'avion, voile souple, voile rigide, pale d'éolienne, pale d'hélicoptère, pale de drone, aileron, empennage, aileron voiture, ouvrage d'art, ...) et à tout profil et appendice hydrodynamique (foil, safran, quille, carène ...). Le capteur de décollement permet une implantation complétement intégrée au profil, il n'y a alors aucune modification de la géométrie du profil lorsqu'il n'y a pas de décollement.

Le capteur à queue souple déformable permet le déploiement avec un recouvrement, à l'image d'une aile d'oiseau. Ledit capteur à queue reprend le principe des rémiges et rectrices, plumes situées sur les ailes et la queue et qui permettent à l'oiseau de voler.

La détection du décollement du fluide à l'aide des mouvements de la queue via l'utilisation du principe du capteur à effet Hall ou autre principe électromagnétique (capteur inductif à courant de Foucault, capteur capacitif ...) par la mesure de l'angle entre la queue du capteur et la tangente du profil, présente comme avantage une meilleure précision par rapport au capteur de type TOR, acronyme Tout Ou Rien.

L'utilisation du capteur à effet Hall permet une meilleure précision de mesure, repro-ductivité, et une plus faible consommation d'énergie comparé à l'art antérieur.

La présente invention a comme autre avantage de minimiser la rupture de ligne du profil.

Les capteurs non intrusifs présentent une languette en matériaux souple avec une mémoire de forme, ce qui offre une meilleure souplesse et légèreté.

La languette de la présente invention est fabriquée à partir de silicone ayant un Shore compris entre 20 et 100. On distingue comme échelle de dureté : Shore A pour les matériaux mous, et Shore D pour les matériaux durs. Le choix de l'échelle de dureté Shore de la languette et donc de sa souplesse, se fait en fonction du type de fluide. Pour les applications aérodynamiques, où le fluide concerné est l'air, les matériaux Shore A ou B sont utilisés, tandis que pour les applications hydrodynamiques où le fluide concerné est l'eau, les matériaux Shore C ou D sont utilisés.

La présente invention permet également d'avoir une implantation en écaille, c'est-à-dire permettant un déploiement avec recouvrement des languettes souples et déformables les unes sur les autres, à l'image des écailles du poisson ou des plumes d'oiseaux. Le capteur de décollement à languettes souples et déformables reprend donc le principe des rémiges et rectrices, plumes situées sur les ailes et la queue et qui permettent à l'oiseau de voler.

La présente invention permet de suivre la position de la queue suivant un angle solide et permet donc un accès à la direction de l'écoulement.

La présente invention est parfaitement adaptée aux profils déformables à géométrie variable (profils mince ou épais, gonflable ou non) ou aux profils rigides.

La présente invention permet une mesure très peu soumise aux effets de la température et permet la mesure au travers les parois.

L'invention est avantageusement mise en œuvre selon les modes de réalisation et les variantes exposées ci-après, lesquelles sont à considérer individuellement ou selon toute combinaison techniquement opérante.

Dans un mode de réalisation, ledit dispositif comporte en outre une batterie positionnée en interne ou en externe audit dispositif, ladite batterie servant comme alimentation et est connectée à la carte électronique.

Dans un mode de réalisation, le dispositif forme une structure monobloc composée de trois parties : une partie comporte la languette souple et déformable, une deuxième partie comporte ladite platine de fixation, une troisième partie comporte une coquille de protection, ladite coquille de protection coiffe ladite platine de fixation.

Dans un mode de réalisation, le capteur de décollement utilise le principe d'électromagnétisme à effet Hall ou inductif à courant de Foucault.

Grâce à ces dispositions, le principe d'électromagnétisme permet de suivre l'angle de la position de la languette souple et déformable par rapport au profil.

Dans un mode de réalisation, la languette souple et déformable se déplace d'une première position, dite position rabaissée, vers une seconde position, dite position relevée.

Grâce à ces dispositions, la languette souple et déformable est mobile d'une position à une autre et permet de suivre le décollement du profil. Il s'agit de la deuxième extrémité qui est libre.

Dans un mode de réalisation, le silicone de la languette a un Shore compris entre 20 et 100.

Dans un mode de réalisation, la présente invention comporte une pluralité de dispositifs pour la détection de décollement selon l'une des revendications précédentes.

Grâce à ces dispositions, la pluralité des capteurs de décollement permet une meilleure précision et une description plus fine de la courbe de la languette souple et déformable.

### Brève description des figures

D'autres avantages, buts et caractéristiques de la présente invention ressortent de la description qui suit faite, dans un but explicatif et nullement limitatif, en regard des dessins annexés, dans lesquels :
[Fig.1] la [Fig.1] décrit ci-dessus représente trois graphiques du coefficient de portance, de la moyenne glissante de l'angle entre la queue et le profil, et de l'écart type glissant en fonction de l'angle d'attaque, explicatifs du signal du capteur de décollement en fonction de l'angle d'attaque.
[Fig.2] la [Fig.2] représente une vue de dessus d'un dispositif de détection de décollement intégré au profil, et représentant l'angle téta (θ) correspondant à la moyenne glissante de l'angle entre la queue et le profil.
[Fig.3] la [Fig.3] représente une vue de dessus du dispositif de détection de décollement selon un mode de réalisation.
[Fig.4] la [Fig.4] représente une vue éclatée d'un dispositif de détection de décollement, suivant une implantation où le capteur est intégré au profil.
[Fig.5] la [Fig.5] représente une vue éclatée et en perspective, d'un dispositif de détection de décollement.
[Fig.6] la [Fig.6] représente une vue de dessus d'un dispositif de détection de décollement soumis à un décollement de l'écoulement.
[Fig.7] la [Fig.7] représente un schéma d'un exemple d'un dispositif de détection de décollement intégré au profil (aile d'avion).
[Fig.8] la [Fig.8] représente une vue de dessus d'un dispositif de détection de décollement intégré au profil.
[Fig.9] la [Fig.9] représente un schéma d'un exemple de déploiement en écaille et de déploiement intégré au profil.
[Fig.10] la [Fig.10] représente un dispositif de détection de décollement positionné à proximité du bord d'attaque pour suivre la position du point d'arrêt, lorsqu'il y a absence de turbulence.
[Fig.11] la [Fig.11] représente un dispositif de détection de décrochage positionné à proximité du bord d'attaque pour suivre la position du point d'arrêt, lorsqu'il y a présence de turbulences.
[Fig.12] la [Fig.12] représente un schéma du principe de fonctionnement physique des capteurs à effet Hall et inductif.
[Fig.13] la [Fig.13] représente un schéma du système multi-capteurs pour décrire finement la courbure de la queue.
[Fig.14] la [Fig.14] représente une vue d'une éolienne équipée d'un système de capteur de décollement par transmission radio sans fils relié à un système d'acquisition.

### Description des modes de réalisation

La [Fig.1] a été décrite précédemment.

La [Fig.2] représente une vue de dessus d'un dispositif de détection de décollement intégré au profil, et représentant l'angle téta (θ) correspondant à la moyenne glissante de l'angle entre la queue et le profil.

La mesure de la moyenne glissante de l'angle entre la queue et le profil, permet de suivre et d'anticiper l'évolution de la portance.

La [Fig.2] montre les trois axes orthogonaux : X ; Y et Z. Ainsi, il est possible d'avoir une valeur de mesure dans les différentes directions, ce qui rend la mesure plus précise que dans une seule direction.

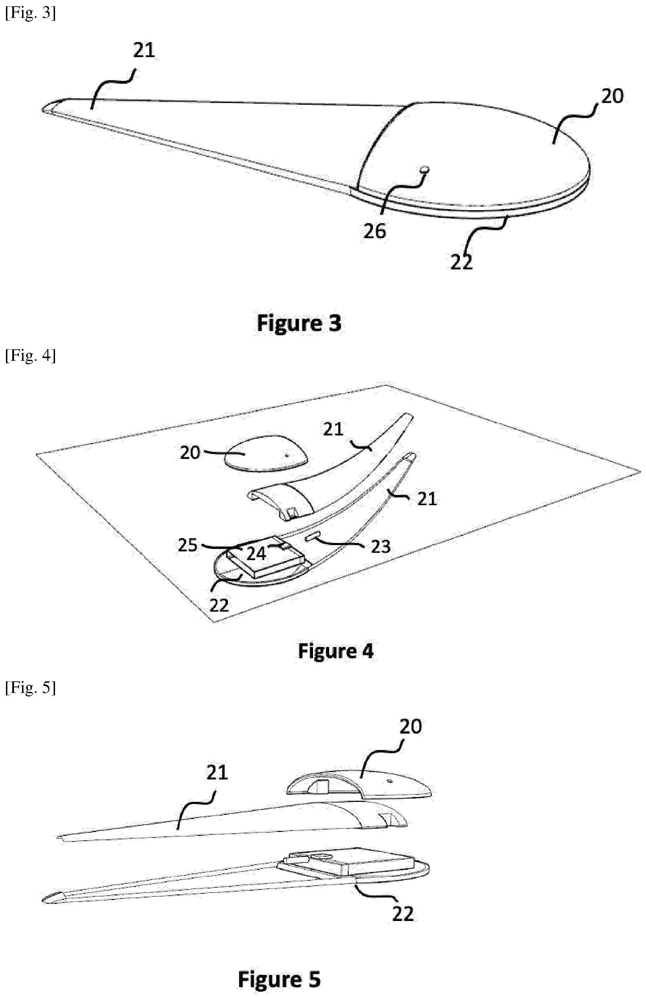

La [Fig.3] représente une vue de dessus du dispositif de détection de décollement formé de la languette souple et déformable 21 soumise au champ de pression et correspondant au traceur du décollement de l'écoulement sur le profil, et de la coquille de protection 20 assemblée à une platine de fixation 22, l'ensemble étant maintenu grâce une vis de fermeture 26.

On entend par le terme de platine de fixation comme étant le support de fixation du dispositif.

Selon un mode de réalisation, la coquille de protection 20, ainsi que la platine de fixation 22 sont réalisées dans une résine polyuréthane de coulée sous vide pour pièce prototype et technique présentant des propriétés mécaniques proches des polymères thermoplastiques tel que l'acrylonitrile butadiène styrène dont l'acronyme est ABS et qui est un polymère thermoplastique rigide, léger et résistant aux chocs, avec un module de flexion égal ou supérieur à 2000MPa - Tg 90°C.

La [Fig.4] représente une vue éclatée d'un dispositif de détection de décollement constitué : de la coquille de protection 20 ; de la languette souple et déformable 21 ; d'un aimant 23 adapté pour mesurer le mouvement de la languette souple 21 ; d'une platine de fixation 22 sur laquelle est fixé un capteur de décollement 24, lui-même fixé sur une carte électronique, ladite carte électronique 25 permet de connecter le capteur à effet Hall 24 à un système de transmission radio (exemple 2.4Ghz), non représenté, ou dans un autre mode de réalisation, le signal est transmis par un moyen filaire, ladite carte électronique 25 est connectée à une alimentation, non représentée, par exemple une batterie interne, ou dans un autre mode de réalisation, le capteur de décollement 24 est alimenté par une source externe.

La platine de fixation 22 est collée sur la surface du profil à l'aide d'une colle adhésif polyuréthane bi-composant.

Le capteur 24 permet de suivre la forme et la position de la languette 21 par rapport au profil.

La carte électronique 25 est encapsulée dans une résine diélectrique pour une étanchéité parfaite.

Selon un mode de réalisation, pour un capteur de décollement 24 utilisant le principe de l'effet Hall, l'aimant 23 est de type néodyme ou ferrite, SmCo, NdFeB ou autre.

Les aimants SmCo, acronyme d'aimant samarium-cobalt, est un type d'aimant permanent résultant de l'alliage de samarium et de cobalt. De même que les aimants NdFeB, acronyme d'aimant au néodyme, qui sont des aimants permanents fabriqués à partir de l'alliage de néodyme, de fer et de bore.

La [Fig.5] représente une vue éclatée et en perspective, des pièces constituants l'ensemble monobloc formé par le dispositif de détection de décollement, ledit capteur de décollement est formé par l'assemblage de la languette souple 21, de la platine de fixation 22, et de la coquille de protection 20 recouvrant la partie de la platine de fixation 22 où se trouve le capteur 24 et la carte électronique.

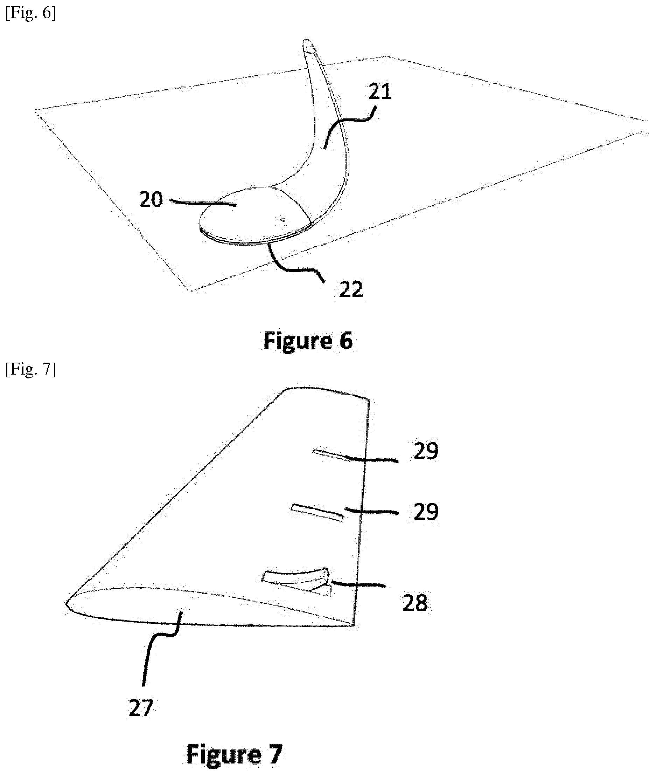

La [Fig.6] représente une vue de dessus d'un dispositif de détection de décollement soumis à un décollement de l'écoulement, la languette souple et déformable 21 est alors en position relevée. La platine de fixation 22 recouverte par la coquille de protection 20 et la languette souple 21, reste collée sur le profil.

Selon un mode de réalisation, la languette souple et déformable 21 est réalisée avec un élastomère de silicone avec un shore de 30 ShA (exemple : SilasticM, marque déposée).

La [Fig.7] représente un schéma d'un exemple d'un dispositif de détection de décollement intégré au profil 27, on distingue le capteur de décollement en position relevée 28 lorsque le capteur est soumis à un décollement de l'écoulement, et le capteur de décollement en position abaissée 29 lorsque le capteur n'est pas soumis à un décollement de l'écoulement.

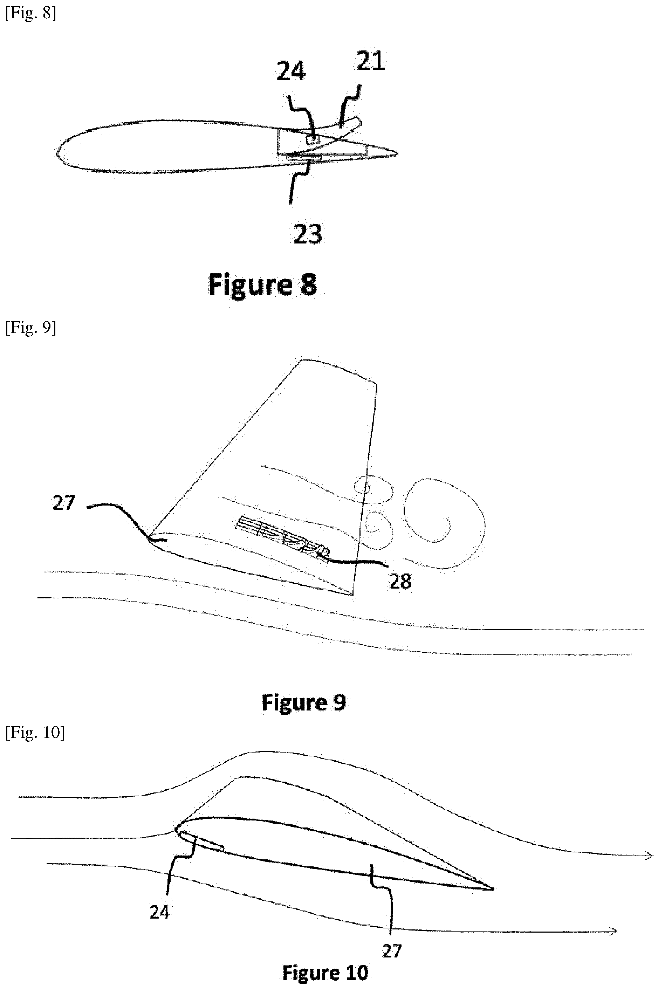

La [Fig.8] représente une vue de dessus d'un dispositif de détection de décollement intégré au profil, la languette souple et déformable 21 est en position relevée lorsque le capteur est soumis à un décollement de l'écoulement, ou en position rabaissée, lorsque le capteur n'est pas soumis à un décollement de l'écoulement et comprend un aimant 23 permettant de générer un signal électrique qui indique une condition de décollement, ainsi que le capteur de décollement 24.

La [Fig.9] représente un schéma d'un exemple de déploiement en écaille intégré au profil 27. On observe un déploiement avec un recouvrement des languettes souples et déformables en position relevée 28 les unes sur les autres. La queue du capteur, correspondant à la languette souple et déformable, se plie, et présente une position relevée 28, à cause du décollement de l'écoulement sur le profil. Si le décollement est suffisamment important cela peut conduire au décrochage.

La [Fig.10] représente un dispositif de détection de décrochage positionné à proximité du bord d'attaque du profil 27, pour suivre la position du point d'arrêt, position à laquelle la vitesse du flux d'air est égale à zéro, lorsqu'il y a absence de turbulence.

Les flèches autour du profil 27, correspondent au flux d'air contournant de part et d'autre le profil 27 et qui s'ouvre à l'avant du dit profil avant de se refermer à l'arrière du dit profil. Les endroits où le flux d'air s'ouvre et se fermes correspondent aux lignes de séparation positionnées juste devant les points d'arrêt.

Le profil aérodynamique se trouve dans un flux d'air avec un angle d'incidence approprié, ainsi ledit profil a une faible incidence.

Le profil aérodynamique/hydrodynamique 27 est dans la zone (a) de la [Fig.1], sa portance évolue linéairement avec l'angle d'incidence. L'écoulement est attaché. Le point d'arrêt est en amont du capteur de décollement. La position du capteur de décollement 24 par rapport au bord d'attaque est choisie de sorte à détecter un angle d'attaque critique précédent le décrochage.

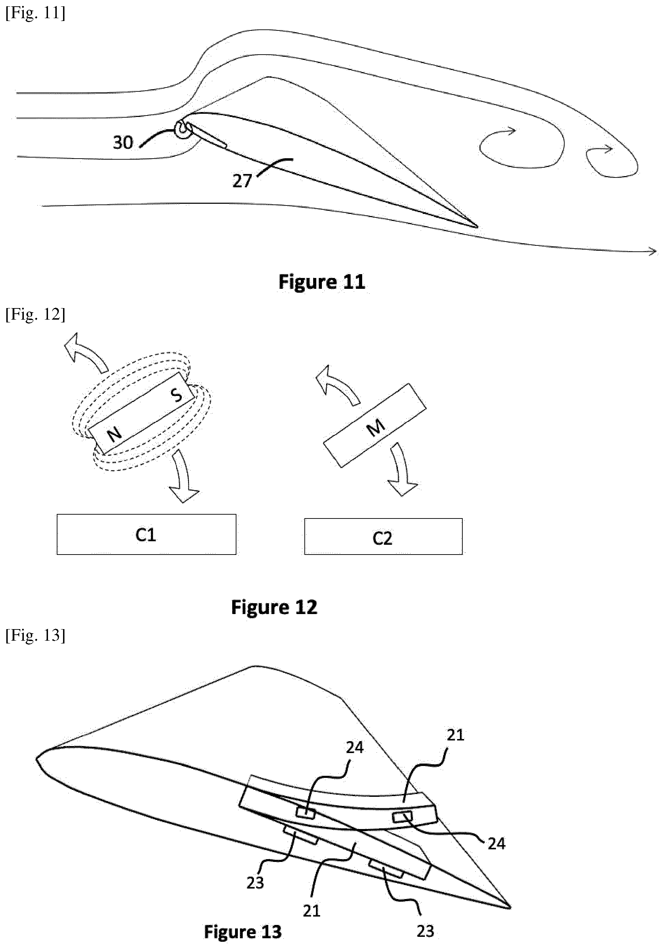

La [Fig.11] représente un dispositif de détection du dépassement d'un angle d'attaque, voire d'un angle d'attaque critique proche de l'angle de décrochage, positionné à proximité du bord d'attaque du profil 27 pour suivre la position du point d'arrêt, lorsqu'il y a présence de turbulences.

Les flèches autour du profil 27, correspondent au flux d'air contournant de part et d'autre le profil 27. L'état de l'écoulement de l'air forme des tourbillons dont l'orientation et la taille fluctuent constamment, et est donc désordonné, correspondant aux turbulences.

Le profil aérodynamique/hydrodynamique 27 est sortie de la zone (a) de la [Fig.1] pour passer en zone (b), (c) ou (d). La languette de bord d'attaque est en position relevée 30. Ainsi, le point d'arrêt a dépassé le capteur de décollement pour alerter d'un décrochage imminent.

La [Fig.12] représente un schéma du principe de fonctionnement physique des capteurs à effet Hall et inductif.

Le capteur à effet Hall bipolaire annoté C1, sensible au pôle nord (N) et au pôle sud (S), permet la détection et la mesure de champs magnétiques, en exploitant l'effet Hall, c'est-à-dire l'apparition d'une force proportionnelle au champ électromagnétique lorsqu'un élément conducteur est intégré dans ce champ électromagnétique.

Le capteur génère alors une tension permettant la mesure du courant et donne un signal lorsqu'il est en présence d'un champ magnétique qui traverse le profil.

Le capteur à effet hall est un capteur à trois axes indépendants et fournit une haute précision (inférieur à 2%) incluant une compensation en température.

Le capteur inductif, annoté C2, également nommé à courant de Foucault, est constitué d'une bobine que génère un champ magnétique pour permettre la détection des variations de position du capteur par rapport à la surface de la pièce métallique (M) placée au niveau du champ magnétique.

Selon un mode de réalisation, la présente invention utilise un capteur dont le principe d'électromagnétisme est à effet Hall. Selon un autre mode de réalisation, la présente invention utilise un capteur dont le principe d'électromagnétisme est inductif.

La [Fig.13] représente un schéma du système multi-capteurs pour décrire finement la courbure de la queue.

Selon un mode de réalisation, la présente invention comporte une pluralité de dispositifs. En effet, plusieurs aimants 23 et capteurs 24 sont présents au sein du dispositif de détection de décollement intégré au profil, la pluralité desdits capteurs 24 permet une meilleure précision.

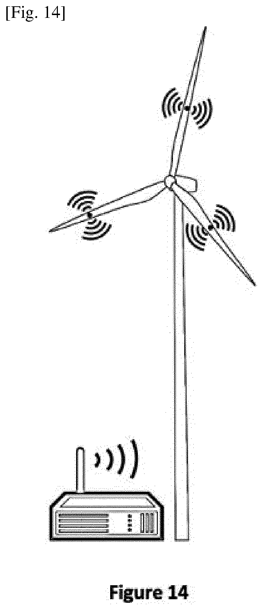

La [Fig.14] représente une vue d'une éolienne équipée d'un dispositif de détection de décollement par transmission radio sans fils relié à un système d'acquisition.

La présente invention concerne également les profils telle qu'une pale d'éolienne. Ainsi les capteurs de décollement placés sur le profil produisent un signal transmis à une fréquence suffisamment élevée pour décrire le phénomène physique, ledit signal qui est transmis par transmission radio à un récepteur distant, est lui-même relié à un système de traitement, ou système d'acquisition, permettant l'enregistrement des données, la surveillance en temps réel le pilotage et l'asservissement du profil ou la mise en sécurité du profil.

### Liste des signes de référence

**[Tableaux1]**

| Références | Désignations |
|---|---|
| 20 | coquille de protection |
| 21 | languette souple et déformable |
| 22 | platine de fixation |
| 23 | Aimant |
| 24 | Capteur |
| 25 | carte électronique |
| 26 | vis de fermeture |
| 27 | Profil |
| 28 | languette en position relevée |
| 29 | languette en position rabaissée |
| 30 | languette de bord d'attaque en position décollée |

## Revendications

1. Dispositif pour la détection de décollement pour profil aérodynamique ou hydrodynamique, comprenant une structure monobloc **caractérisé en ce qu'**il comporte :
- une languette en matériau souple et déformable (21) à partir de silicone s'étendant entre une première extrémité et une deuxième extrémité, la deuxième extrémité étant libre ;
- une platine de fixation (22) configurée pour être fixée à un profil, la platine de fixation comporte la première extrémité de la languette souple et déformable (21), ladite platine de fixation (22) comporte en outre une carte électronique (25) et au moins un capteur de décollement (24) comprenant un aimant (23) générant un signal électrique qui indique une valeur de décollement selon trois axes orthogonaux ; la carte électronique (25) fixée sur la platine de fixation (22) transmet le signal électrique par un système de transmission radio, ou par un moyen filaire.

2. Dispositif selon la revendication 1, dans lequel ledit dispositif comporte en outre une batterie positionnée en interne ou en externe audit dispositif, ladite batterie servant comme alimentation et est connectée à la carte électronique (25).

3. Dispositif selon la revendication 1, dans lequel la structure monobloc est composée de trois parties : une partie comporte la languette souple et déformable (21), une deuxième partie comporte ladite platine de fixation (22), une troisième partie comporte une coquille de protection (20), ladite coquille de protection (20) coiffe ladite platine de fixation (22).

4. Dispositif selon la revendication 1, dans lequel le capteur de décollement (24) utilise le principe d'électromagnétisme à effet Hall ou inductif à courant de Foucault.

5. Dispositif selon la revendication 1, dans lequel la languette souple et déformable (21) est mobile entre une première position, dite position rabaissée, et une seconde position, dite position relevée.

6. Dispositif selon la revendication 1, dans lequel le silicone de la languette a un Shore compris entre 20 et 100.

7. Ensemble comportant une pluralité de dispositifs pour la détection de décollement selon l'une des revendications précédentes.

## Patentansprüche

1. Vorrichtung zur Erkennung der Ablösung für ein aerodynamisches oder hydrodynamisches Profil, eine Einblock-Struktur umfassend, **dadurch gekennzeichnet, dass** sie enthält:
- eine Lasche aus weichem und verformbarem Material (21) aus Silikon, die sich zwischen einem ersten Ende und einem zweiten Ende erstreckt, wobei das zweite Ende frei ist;
- eine Befestigungsplatte (22), die konfiguriert ist, um an einem Profil befestigt zu werden, wobei die Befestigungsplatte das erste Ende der weichen und verformbaren Lasche (21) enthält, wobei die Befestigungsplatte (22) ferner eine elektronische Karte (25) und mindestens einen Ablösungssensor (24) enthält, der einen Magneten (23) umfasst, der ein elektrisches Signal erzeugt, das einen Ablösungswert entlang dreier orthogonaler Achsen anzeigt; wobei die auf der Befestigungsplatte (22) befestigte elektronische Karte (25) das elektrische Signal über ein Funkübertragungssystem oder über ein drahtgebundenes Mittel überträgt.

2. Vorrichtung nach Anspruch 1, wobei die Vorrichtung ferner eine Batterie enthält, die intern oder extern an der Vorrichtung positioniert ist, wobei die Batterie als Stromversorgung dient und mit der elektronischen Karte (25) verbunden ist.

3. Vorrichtung nach Anspruch 1, wobei die Einblock-Struktur aus drei Teilen besteht: ein Teil enthält die weiche und verformbare Lasche (21), ein zweiter Teil enthält die Befestigungsplatte (22) und ein dritter Teil enthält eine Schutzschale (20), wobei die Schutzschale (20) die Befestigungsplatte (22) abdeckt.

4. Vorrichtung nach Anspruch 1, wobei der Ablösungssensor (24) das elektromagnetische Hall-Effekt- oder induktive Wirbelstrom-Prinzip verwendet.

5. Vorrichtung nach Anspruch 1, wobei die weiche und verformbare Lasche (21) zwischen einer ersten Position, abgesenkte Position genannt, und einer zweiten Position, angehobene Position genannt, beweglich ist.

6. Vorrichtung nach Anspruch 1, wobei das Silikon der Lasche einen Shore zwischen 20 und 100 aufweist.

7. Baugruppe, die eine Vielzahl von Vorrichtungen zur Erkennung der Ablösung nach einem der vorhergehenden Ansprüche enthält.

## Claims

1. A device for detecting separation for an aerodynamic or hydrodynamic profile, comprising a one-piece structure **characterised in that** it comprises:
- a tab (21) made of flexible and deformable material using silicone extending between a first end and a second end, the second end being free;
- an attachment plate (22) configured to be attached to a profile, the attachment plate comprises the first end of the flexible and deformable tab (21), said attachment plate (22) further comprises an electronic board (25) and at least one separation sensor (24) comprising a magnet (23) generating an electrical signal which indicates a separation value along three orthogonal axes; the electronic board (25) attached to the attachment plate (22) transmits the electrical signal by a radio transmission system, or by a wired means.

2. The device according to claim 1, wherein said device further comprises a battery positioned internally or externally in relation to said device, where said battery serves as a power supply and is connected to the electronic board (25).

3. The device according to claim 1, wherein the one-piece structure is composed of three parts: one part comprises the flexible and deformable tab (21), a second part comprises said attachment plate (22), a third part comprises a protective shell (20), said protective shell (20) covers said attachment plate (22).

4. The device according to claim 1, wherein the separation sensor (24) uses the Hall effect or eddy current inductive electromagnetism principle.

5. The device according to claim 1, wherein the flexible and deformable tab (21) is movable between a first position, referred to as lowered position, and a second position, referred to as raised position.

6. The device according to claim 1, wherein the silicone of the tab has a Shore between 20 and 100.

7. An assembly comprising a plurality of devices for detecting separation according to one of the preceding claims.
